# EUROPÄISCHE PATENTSCHRIFT

(11) **EP 3 192 014 B1**
(45) Veröffentlichungstag und Bekanntmachung des Hinweises auf die Patenterteilung: **07.07.2021**
(21) Anmeldenummer: 15767079.5
(22) Anmeldetag: 09.09.2015
(51) Int. Cl.: G06K 19/14, G06Q 30/00

(54) **IDENTIFIZIERUNGSSYSTEM, VERFAHREN UND BENUTZERMEDIUM**
IDENTIFICATION SYSTEM, METHOD AND USER MEDIUM
SYSTÈME D'IDENTIFICATION, PROCÉDÉ ET SUPPORT D'INFORMATIONS D'UTILISATEUR

(30) Priorität: 09.09.2014 CH 13622014
(43) Veröffentlichungstag der Anmeldung: 19.07.2017
(73) Patentinhaber: Kaba AG, 8620 Wetzikon (CH)
(72) Erfinder: KUSTER, Christian, 8342 Wernetshausen (CH); SCHACHER, Edgar, 8604 Volketswil (CH)
(74) Vertreter: Balder IP Law, S.L.
(86) Internationale Anmeldenummer: PCT/CH2015/000131
(87) Internationale Veröffentlichungsnummer: WO 2016/037295

(56) Entgegenhaltungen:
- WO-A1-2005/081174
- WO-A2-2004/090800
- US-A1- 2004 201 479
- None

## Beschreibung

Die Erfindung betrifft das Gebiet Identifizierungstechnologie, wie sie beispielsweise für Sicherheits- und Datenträgersysteme zur Anwendung kommt. Sie betrifft insbesondere ein Identifizierungssystem und ein Verfahren.

Identifizierungssysteme (oft auch als Identifikationssysteme bezeichnet, oft wäre der Begriff "Authentifizierungssystem" korrekter) kommen zum Einsatz bei unterschiedlichen Anwendungen wie der Zugangskontrolle (in sogenannten 'online-Identifizierungssystemen, bei denen ein Objekt, zu dem der Zugang kontrolliert wird, in Kontakt mit einer zentralen Einheit steht, und in , offline'-Systemen bei denen das nicht der Fall ist), Wertkartensystemen, Datenerfassungssystemen etc.

Meist weisen die Identifizierungssysteme Benutzermedien - beispielsweise "Smart Cards" oder auch mit einem entsprechenden Datenträger versehene physische Schlüssel - auf, die mit einem Datenspeicher versehen sind, auf dem ein geeigneter Identifikationscode abgespeichert ist. In der Anwendung findet - meist berührungslos - ein Datenaustausch mit einer Leseeinrichtung statt, wobei anhand des Identifikationscodes ein Authentifizierungsprozess ausgeführt wird und die gewünschte Aktion - bspw. die Freigabe eines Objektes, der Bezug einer Ware oder Dienstleistung, das Schreiben einer Information auf das Benutzermedium, etc. - nur erfolgreich durchgeführt wird, wenn in der Leseeinrichtung oder eventuell im Benutzermedium die Berechtigung des mit dem Identifikationscode versehenen Benutzermediums festgestellt wird oder das Resultat einer Rechenoperation auf Basis dieses einen gewünschten Wert ergibt.

Ein praktisches Problem stellt sich oft bei grösseren Identifizierungssystemen, in welchen die Anzahl und Identität der Nutzer nicht von Anfang an, beim Einrichten des Identifizierungssystems, bekannt sein kann. In solchen Identifizierungssystemen muss es möglich sein, auch lange nach dem Einführen des Identifizierungssystems neue funktionsfähige Benutzermedien zu verteilen, beispielsweise an neu eintretende Mitarbeiter oder neue Kunden. In der Praxis wird das oft so gehandhabt, dass dem Systembetreiber eine grössere Anzahl von bereits mit einem Identifikationscode versehenen Benutzermedien zur Verfügung gestellt wird und/oder dass solche Benutzermedien beim Hersteller nachbestellt werden können. Zur Initialisierung wird ein dem neuen Benutzer auszuhändigendes Benutzermedium zunächst von einem Lesegerät erfasst, welches in einer zentralen Einheit vorhanden ist. Dort werden dann die Berechtigungen dieses Benutzers definiert, und anschliessend kann das Benutzermedium dem Benutzer ausgehändigt werden.

Nachteilig an dieser Lösung ist, dass dieser Vorgang die physische Anwesenheit des Benutzermediums am Ort der zentralen Einheit bedingt. Folglich kann ein neu in das Identifizierungssystem einzuführendes Benutzermedium nur an einem einzigen Ort initialisiert werden. Das ist insbesondere bei Identifizierungssystemen mit dezentralen Elementen durchaus nachteilig. Ausserdem bedingt das das Vorhandensein einer solchen zentralen Einheit mit einer eigenen Leseeinrichtung und mit einer Kommunikationsmöglichkeit mit den Leseeinrichtungen, was nicht zwangslos in jede Systemorganisation passt.

Als Alternative kommt bei einigen Standards die dezentrale Programmierung der Leseeinrichtungen über RFID in Frage, was jedoch nicht von allen Standards unterstützt wird.

Aus der WO 2005/081174 ist ein System für den Versand und das Nachverfolgen von Stückgut bekannt. Dieses System sieht vor, dass die Güter mit einem elektronischen Etikett in Form eines RFID-'tags' und zusätzlich mit einem Strichcode versehen sind. Beim Versenden werden die Strichcodes der einer Verpackungseinheit zugeordneten Güter erfasst und an einen Datenserver gesendet. Dieser generiert einen elektronischen Produktcode (EPC), welcher auf das elektronische Etikett geschrieben wird. Das ermöglicht beim Empfänger eine fälschungssicherere Authentifizierung als wenn das Gut bloss einen Strichcode aufwiese. Für die hier geschilderte Anwendung ist das für Stückgut entwickelte Verfahren nur schon deshalb keine Lösung, weil auch dieses die physische Anwesenheit des elektronischen Etiketts am Ort eines RFID-Schreibgeräts bedingt. Die US 2004/0201479 betrifft ein Gegenstands-Nachverfolgungssystem bspw. für Bibliotheken. Es wird vorgeschlagen, aus Performancegründen existierende strichcodebasierte System durch ein auf RFID basierendes System zu ersetzen, wobei Bücher (oder andere Medien) auch beides - sowohl einen Strichcode als auch einen RFID-Tag aufweisen können. Es wird weiterhin vorgeschlagen, dass das Lesegerät auch RFID-Tags erzeugen kann, für Medien, die bis dann erst mit einem Strichcode versehen sind. Auch dieses Vorgehen bringt aus denselben Gründen wie beim System nach WO 2005/081174 für die hier geschilderte Anwendung keine weiteren Vorteile.

In WO 2004/090800 ist eine Vorrichtung zur sicheren Feststellung der willentlichen Benutzung eines kontaktlosen Datenträgers beschrieben. Hierzu weist der kontaktlose Datenträger zusätzlich Daten auf, welche über einen optischen Datenübertragungskanal übertragbar sind. Die Authentifizierung über den zusätzlichen Datenübertragungskanal verhindert ein unbeabsichtigtes Betätigen des Datenträgers, da die optische Information nicht mehr zur Verfügung steht, wenn der Datenträger für das Lesegerät optisch nicht mehr sichtbar ist.

Es ist folglich eine Aufgabe der vorliegenden Erfindung, ein Identifizierungssystem und ein entsprechendes Verfahren zur Verfügung zu stellen, welche Nachteile des Standes der Technik überwinden und welche insbesondere ein einfaches Hinzufügen von neuen Benutzermedien zum System ermöglichen, ohne die Sicherheit zu kompromittieren.

Diese Aufgabe wird gelöst durch die Erfindung, wie sie in den Patentansprüchen definiert ist.

Gemäss einem Aspekt der Erfindung weist das Identifizierungssystem wie an sich bekannt eine Mehrzahl von Benutzermedien auf, von denen jedes eine integrierte Schaltung mit Speichermitteln und einen in den Speichermitteln abgespeicherten Identifikationscode aufweist. Dabei bildet der Identifikationscode zumindest einen Teil eines Identifikationsdatensatzes, welcher alle für einen Authentifizierungsprozess notwendigen Daten aufweist. Das Identifizierungssystem weist zudem mindestens eine Leseeinrichtung auf, wobei die Leseeinrichtung befähigt ist, für den Authentifizierungsprozess den Identifikationscode über Radiowellen berührungslos aus der integrierten Schaltung eines Benutzermediums aus der Mehrzahl der Benutzermedien auszulesen. Das Identifizierungssystem weist ferner eine Benutzerverwaltungseinrichtung auf, wobei die Benutzerverwaltungseinrichtung mit der Leseeinrichtung kommuniziert und das Resultat des Authentifizierungsprozesses abhängig davon ist, ob das identifizierte Benutzermedium in der Benutzerverwaltungseinrichtung als berechtigt vermerkt ist oder nicht. Dabei ist das Identifizierungssystem befähigt, einen Vorgang abhängig vom Resultat des Authentifizierungsprozesses auszulösen oder nicht auszulösen, bspw. das Aufschliessen einer Türe, das Abbuchen eines Geldbetrags oder den Zugang zu einem EDV-System etc.. Ferner weist jedes Benutzermedium einen optisch auslesbaren Code auf, welcher eine das betreffende Benutzermedium individuell identifizierende Identifikationsinformation beinhaltet, wobei das Identifizierungssystem befähigt ist, ein jeweils über den optisch auslesbaren Code erkanntes Benutzermedium in der Benutzerverwaltungseinrichtung als berechtigt zu vermerken. Der optisch auslesbare Code kann insbesondere den Identifikationscode beinhalten, beispielsweise gar mit ihm identisch sein. Alternativ ist auch möglich, dass die Identifikationsinformation den Identifikationscode zwar nicht beinhaltet, aber für mindestens in einer Gruppe von Benutzermedien (bspw. den für ein bestimmtes Land oder einem bestimmten Anwendersegment zur Verfügung stehenden) eine eindeutige Zuordnung zum Identifikationscode ermöglicht.

Wie erwähnt weisen dabei die Benutzermedien den Identifikationscode schon auf. Sämtliche für den Authentifizerungsprozess nötigen Angaben sind in den Speichermitteln bereits vorhanden. Es braucht daher im Unterschied zum vorstehend diskutierten Stand der Technik keinen Schreibvorgang und keine andere Modifikation am Benutzermedium um dieses zum System hinzuzufügen und es für Vorgänge zu berechtigen. Vielmehr erfordert das Hinzufügen ausschliesslich den entsprechenden Vermerk auf Seiten der Benutzerverwaltungseinrichtung, weshalb ausreichend ist, dass optisch auslesbare Daten und/oder optisch ausgelesene Daten an dieses übermittelt werden.

Die Benutzerverwaltungseinrichtung kommuniziert mit der Leseeinrichtung, welche den Authentifizierungsprozess anhand des Datenaustauschs über Radiowellen durchführt, und das Resultat des Authentifizierungsprozesses ist abhängig davon, ob das Benutzermedium in der Benutzerverwaltungseinrichtung vermerkt ist oder nicht. Diese Kommunikation zwischen der Benutzerverwaltungseinrichtung und der Leseeinrichtung kann online, im Moment der Authentifizierung, oder offline, als Aufdatierung eines Datenspeichers der Leseeinrichtung, geschehen.

Mit anderen Worten bildet der Identifikationscode einen Identifikationsdatensatz oder einen Teil eines solchen Identifikationsdatensatzes, welcher in der integrierten Schaltung von Anfang an vorhanden ist und alle für den Authentifizierungsprozess notwendigen Daten aufweist. Für die Berechtigung zum genannten Vorgang braucht es also nur noch den Vermerk in der Benutzerverwaltungseinrichtung als 'berechtigt' der nach dem optischen Auslesen gemacht wird.

Besonders bevorzugt kann sein, wenn jeder Identifikationscode weltweit nur für ein einziges Benutzermedium vergeben wird und die Identifikationsinformation entweder den Identifikationscode vollständig umfasst, mindestens wesentliche Teile des Identifikationscodes umfasst (bspw. wenn mögliche Redundanzen für Redundanztests, bspw. Prüfbits, zum Identifikationscode gerechnet werden, allenfalls ohne diese Redundanzen) vollständig umfasst, oder diesem mindestens eindeutig zuordenbar ist.

In Ausführungsformen kann das Benutzermedium so eingerichtet sein, dass der Identifikationscode einen dem Hersteller eindeutig zugeordneten elektronischen Herstellerschlüssel ("Stamp") enthält. Während des Authentifizierungsprozesses oder vorgängig zu diesem kann dann eine Leseeinrichtung die Identität dieses Teils des Identifikationscodes mit dem von ihr selbst abgespeicherten Herstellerschlüssel prüfen, was als zusätzliche Massnahme gegen Manipulationen dient.

Der optisch auslesbare Code kann insbesondere ein 2D-Code sein. Die Verwendung von Codes der an sich bekannten Art, bspw. von QR-Codes ist möglich.

Das Identifizierungssystem weist auch mindestens eine Leseeinrichtung auf, die zum erwähnten Datenaustausch mit den Benutzermedien zwecks Authentifizierungsprozess befähigt ist. Abhängig vom Resultat des Authentifizierungsprozesses wird das Identifizierungssystem einen Vorgang auslösen oder nicht, bspw. das Aufschliessen einer Türe, das Abbuchen eines Geldbetrags oder den Zugang zu einem EDV-System etc..

Das Identifizierungssystem weist ausserdem eine Benutzerverwaltungseinrichtung auf. Diese kann im der Leseeinrichtung integriert oder von dieser separat sein (und bspw. im letzteren Fall mit mehreren der Leseeinrichtungen zusammenwirken). Die Freigabe des Vorgangs erfolgt abhängig davon ob in der Benutzerverwaltungseinrichtung das am Datenaustausch beteiligte Benutzermedium als berechtigt vermerkt ist oder nicht.

Der Authentifizierungsprozess selbst kann wie an sich bekannt und mit den Standards/Merkmalen von an sich bekannten Identifizierungssystemen (bspw. Mifare, Legic, etc.) stattfinden.

Weiter ist das Identifizierungssystem befähigt, einem über den optisch auslesbaren Code erkannten Benutzermedium eine Berechtigung zu verleihen, indem dieses in der Benutzerverwaltungseinrichtung entsprechend vermerkt wird.

Zu diesem Zweck kann das Identifizierungssystem eine Programmierungseinheit aufweisen, die befähigt ist, die Benutzerverwaltungseinrichtung entsprechend zu programmieren.

Die Programmierungseinheit kann gemäss einer ersten Option eine Software aufweisen, welche auf einem Gerät läuft, welches einerseits ein Mittel zum Erfassen des optisch auslesbaren Codes aufweist und andererseits ein Mittel zum Austauschen von Daten mit der Leseeinrichtung. Dieses Mittel zum Austauschen von Daten mit der Leseeinrichtung kann bspw. ein Kommunikationsmittel zum Herstellen einer bspw. drahtlosen Punkt-zu-Punkt-Verbindung über einen Kommunikationsstandard, bspw. NFC, Bluetooth, Infrarot, gepulste Informationsübertragung ("UWB"), Induktion, etc. sein. Dabei kann insbesondere bevorzugt sein, wenn dieser Kommunikationsstandard verschieden vom Standard ist, welcher für die Authentifizierung (RFID) benutzt wird, was ein Sicherheitsmerkmal darstellt. Ein solches Gerät kann beispielsweise ein Smartphone sein, welches den Datenaustausch über Nahfeldkommunikation (NFC) und/oder Bluetooth bzw. einen anderen geeigneten Kommunikationsstandard unterstützt; auch andere Kommunikationsstandards wie WLAN etc. sind möglich.

Gemäss einer weiteren Option kann die Programmierungseinheit auch als Teil einer zentralen Einheit ausgebildet sein, welche mit den Leseeinrichtungen des Identifizierungssystems in Kommunikationsverbindung steht oder in Kommunikationsverbindung bringbar ist. In diesem Fall kann die Erfassung des optisch auslesbaren Codes ebenfalls über ein Smartphone oder dergleichen erfolgen und an die zentrale Einheit übermittelt werden. Eine solche zentrale Einheit kann auch die Benutzerverwaltungseinrichtung umfassen; alternativ kann sie dezentrale Benutzerverwaltungseinrichtungen - bspw. in jeder Leseeinheit - entsprechend ansteuern.

Nebst dem Erkennen der Identifikationsinformation über den optisch auslesbaren Code kann das Verleihen einer Berechtigung in der Praxis noch an weitere Bedingungen geknüpft sein, welche von der Programmierungseinheit vorgegeben werden, bspw. die Eingabe eines alphanumerischen Codes durch den Benutzer, die Erkennung eines Sicherheitsmerkmals etc.; die Programmierungseinheit kann ausserdem so ausgebildet sein, dass sie je nachdem unterschiedliche Berechtigungen vergeben kann und/oder zur Vergabe von Berechtigungen zunächst in Kommunikationsverbindung mit einer anderen Einheit stehen muss und sich von dort nötige Daten geben lassen muss.

Ausser der - beispielsweise das Benutzermedium individuell und eindeutig identifizierenden - Identifikationsinformation kann der optisch auslesbare Code auch weitere Informationen beinhalten, bspw.
- Informationen über die physische Ausgestaltung des Benutzermediums, und/oder
- Informationen über eine Version des Benutzermediums, und/oder
- Informationen über einen anzuwendenden Funktechnologie-Standard, und/oder
- Informationen über die Grösse eines für Anwendungen und/oder Anweisungen in den Speichermitteln zur Verfügung stehenden Datenspeichers.

Zusammen mit dem optisch auslesbaren Code können weitere Informationen an die Benutzerverwaltungseinrichtung übermittelt werden. Insbesondere können diese Informationen dazu dienen, das zum optisch auslesbaren Code gehörende Benutzermedium einem Benutzer oder einer Gruppe von Benutzern zuzuordnen. Beispielsweise kann es sich dabei um eine Gruppe von Benutzern handeln, welche auf Grund Ihrer Funktion über dieselben Berechtigungen verfügen. Bei den weiteren Informationen kann es sich beispielsweise um eine Personalnummer, eine alphabetische und/oder numerische Kennung, ein Passwort und/oder einen Namen des Benutzers handeln. Eine solche Personalisierung des Benutzermediums ermöglicht eine auf einen Benutzer oder eine Benutzergruppe spezifisch abgestimmte Freigabe von Berechtigungen.

Aufgrund der Ausgestaltung der Benutzermedien kann ein neuer Benutzer, welcher ein Benutzermedium erhalten hat, oder eine mit ihm zusammenarbeitende Person (eine betriebsinterne Verwalterin der elektronischen Schlüssel zum Beispiel) die ihm zustehende Berechtigung erlangen, ohne dass er selbst oder das Benutzermedium sich an einem bestimmten Ort befinden oder einfinden muss. Ferner kann das Identifizierungssystem so ausgelegt sein, dass der Benutzer nicht auf ein Gerät zurückgreifen muss, welches ein integraler Bestandteil des Identifizierungssystems ist. Beispielsweise kann es sich dabei um ein persönliches Gerät des Benutzers, beispielsweise sein Mobiltelefon, oder um ein Gerät des Arbeitgebers, beispielsweise eine Kamera oder einen Scanner, handeln.

Ferner kann das Vermerken eines Benutzermediums und gegebenenfalls des dem Benutzermedium zugeordnete Benutzer durch den Benutzer selbst, initiiert werden, indem der Benutzer den optisch auslesbaren Code und gegebenenfalls weitere Informationen an die Programmierungseinheit aktiv übermittelt. Das heisst auch, dass in derart ausgestalteten Ausführungsformen kein Benutzermedium ohne eine Aufnahmeanfrage von Benutzerseite her in der Benutzerverwaltung vermerkt wird.

Ein passives, d.h. ohne Mitwirken des Trägers des Benutzermediums, Vermerken eines Benutzermediums ist ausgeschlossen. Ferner kann eine erfolgreiche Aufnahmeanfrage eine oder mehrere Zustimmungen des Benutzers, beispielsweise die Zustimmung zu Verhaltensregeln oder zu einem Pflichtenheft beinhalten.

Neben dem Benutzer selbst, können auch weitere Personen die Benutzerseite repräsentieren, beispielsweise Vorgesetzte oder zentrale Organe eines Unternehmens.

Ein Verfahren zum Hinzufügen eines Benutzermediums zu einem Identifizierungssystem der vorstehend definierten Art, umfassend die Schritte
- Zur Verfügung-Stellen des Benutzermediums mit dem in den Speichermitteln abgespeicherten Identifikationscode sowie mit einem optisch auslesbaren Code,
- Optisches Auslesen des optisch auslesbaren Codes,
- Auswerten des ausgelesenen optisch auslesbaren Codes mit Extraktion der Identifikationsinformation,
- als berechtigt Vermerken des Benutzermediums durch die Benutzerverwaltungseinrichtung.

Neben der Extraktion der Identifikationsinformation ist auch eine Verifikation und/oder eine Plausibilitätsprüfung der Identifikationsinformation denkbar.

Das optische Auslesen kann bspw. das Aufnehmen eines Bildes mindestens des optisch auslesbaren Codes mit einer Digitalkamera umfassen.

Das Benutzermedium kann zur Verfügung gestellt werden, indem es als beliebiges Benutzermedium einer gewünschten physischen Ausgestaltung genommen wird, gegebenenfalls mit dem richtigen Herstellerschlüssel, bspw. aus einem vorhandenen Vorrat von Benutzermedien.

Nachfolgend werden Eigenschaften und Ausführungsbeispiele der Erfindung anhand von schematischen Figuren diskutiert. In den Figuren zeigen:
- Fig. 1 ein Benutzermedium;
- Fig. 2 den Ablauf bei der Registrierung eines Benutzermediums;
- Fig. 3 einen Authentifizierungsprozess; und
- Fig. 4 ein Ablauf bei der Durchführung des Authentifizierungsprozesses.

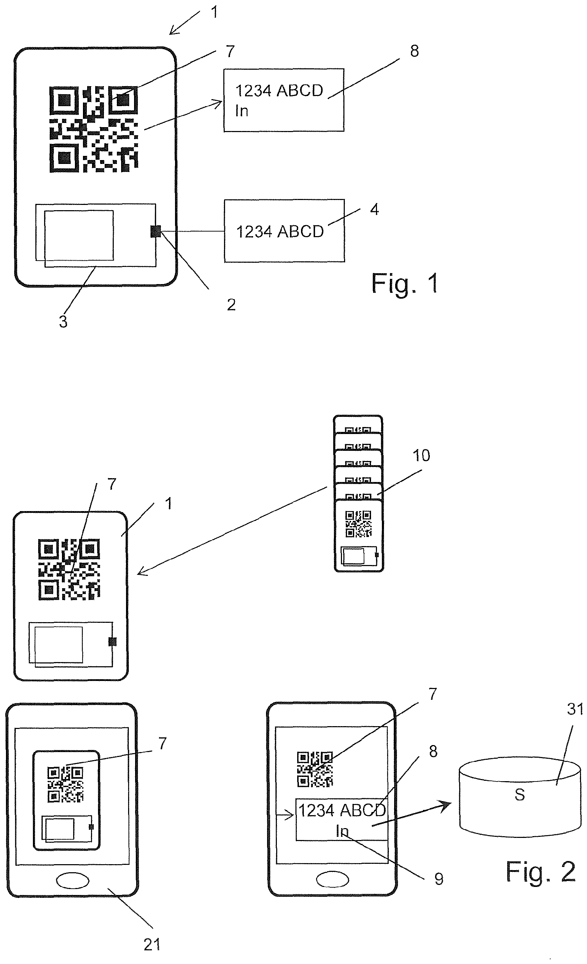

Das Benutzermedium 1 gemäss **Figur 1** ist bspw. als Karte, als Schlüssel oder als in ein anderes Medium (bspw. eine Uhr oder ein Mobiltelefon) integrierte Vorrichtung ausgebildet. Es weist wie an sich bekannt einen RFID-Chip 2 und eine RFID-Antenne 3 auf. In der gezeichneten Ausführungsform ist der RFID-Chip 2 ein rein passiver Chip der über keinen eigenen Batterie- oder Netzanschluss verfügt, so dass die für den Lese- und allenfalls einen Schreibprozess benötigte Energie allein von der Leseeinrichtung stammt.

Der RFID-Transponder (mit dem RFID-Chip 2 und der RFID-Antenne 3) kann in an sich bekannter Art ausgeführt sein.

Der RFID-Chip kann insbesondere als Chip einer bekannten Transponder-Technologie entsprechen, bspw. der Mifare-Chipkartentechnik oder der Legic-Technologie.

Der Chip enthält einen Datenspeicher mit unter anderem einem eindeutigen Identifikationscode 4, anhand dessen während eines Authentifizierungsprozesses die Berechtigung des Benutzermedium-Inhabers für einen bestimmten Vorgang geprüft wird.

Nebst dem eindeutigen Identifikationscode kann der Datenspeicher optional noch andere Informationen beinhalten. Daneben kann der RFID-Chip auch Speicherbereiche aufweisen, die für bestimmte Applikationen beschreibbar sein können. In diesen Ausführungsformen wird das Identifizierungssystem auch mindestens ein Lesegerät aufweisen, welches nicht nur Lesen, sondern auch schreiben kann.

Beispielsweise kann der RFID-Chip drei Segmente beinhalten. Das erste Segment enthält die Card-ID. Das zweite Segment ist für die Anwendung "Schrankschloss" ("Garderobenschlüssel") reserviert, bei denen das Benutzermedium temporär einem anfänglich frei wählbaren Lesegerät zugeordnet wird und so bspw. ein temporär reserviertes Schloss wieder öffnen kann. Das dritte Segment dient für Anweisungen, welche auf das Benutzermedium geschrieben werden können, bspw. Berechtigung zufügen, Berechtigung wegnehmen, Berechtigung auswechseln.

Nebst dem RFID-Transponder weist das Benutzermedium auch einen optisch auslesbaren Code 7 auf. Dieser kann als 2-dimensionaler Code, bspw. als QR-Code, oder als eindimensionaler Code, bspw. als Strichcode ausgebildet sein und irgend eine Form aufweisen, die das optoelektronische Auslesen ermöglicht. Auch eine Darstellung in Buchstaben und/oder Zahlen ist möglich und ein optisch auslesbarer Code im Sinne der vorliegenden Erfindung. Oft besonders bevorzugt sind aufgrund ihrer Leistungsfähigkeit und der Möglichkeit zur Fehlerkorrektur jedoch binäre und/oder zweidimensionale Codes.

Der optisch auslesbare Code 7 enthält folgende Informationen:
- Informationen, welche die Bestimmung der Identität des Benutzermediums, d.h. eine individuelle Identifikation ermöglichen. Diese Informationen können insbesondere aus dem Identifikationscode bestehen oder diesen ganz oder zum Teil beinhalten. Es ist aber im Prinzip auch möglich, dass diese Identifikations-Informationen vom Identifikationscode verschieden sind und - bspw. anhand einer Tabelle oder durch geeignete Rechenoperationen - eine Zuordnung zu diesem ermöglichen. Wichtig ist, dass diese Informationen für das Benutzermedium individuell sind, d.h. ein Benutzermedium von einem anderen unterscheiden. Insbesondere können sie so sein, dass jede IdentifikationsInformation weltweit nur einmal vergeben wird. Es ist aber auch nicht ausgeschlossen, dass sie mehrmals vergeben werden, bspw. für verschiedene Länder oder verschiedene Abnehmersegmente, wobei innerhalb eines solchen Segments jede Identifikationsinformation bevorzugt nur einmal vergeben wird.

- Optional Informationen darüber, was die physische Ausgestaltung des Benutzermediums ist (Schlüssel, Karte, aktiver Transponder, etc.)
- Optional Informationen über die Version,
- Optional Informationen über die anzuwendende Funktechnologie (den anzuwendenden Standard);
- Optional Informationen über die Grösse des für Anwendungen und/oder Anweisungen im RFID-Chip zur Verfügung stehenden Speichers. Wenn dieser wie vorstehend diskutiert segmentiert ist, können diese Informationen die Grösse des dritten Segments beinhalten.

Diese optional im optisch auslesbaren Code enthaltenen Informationen können je einzeln oder in beliebigen Kombinationen vorhanden sein; insbesondere kann der optisch auslesbare Code auch alle diese Informationen kombiniert enthalten.

**Figur 2** illustriert den Vorgang bei der Initialisierung eines Benutzermediums, d.h. der Registrierung durch die Benutzerverwaltungseinrichtung. Benutzermedien 1 werden im Allgemeinen in genügender Menge vorproduziert und stehen den Betreibern in einem Vorrat 10 zur Verfügung. Für die Initialisierung nimmt der Betreiber ein beliebiges Benutzermedium 1 der gewünschten physischen Ausgestaltung vom Stapel. Der Benutzer oder eine ihn unterstützende Person erfasst dann den optisch auslesbaren Code. Das kann bspw. einfach durch Abfotografieren, hier mit einem Smartphone 21 geschehen. Das Identifizierungssystem weist geeignete Auslesesoftware auf, um die Informationen aus dem optisch auslesbaren Code 7 auszulesen.

Eine solche Auslesesoftware kann bspw. als App gleich auf dem Smartphone 21 vorhanden sein. Alternativ kann vom Smartphone (oder einem anderen Gerät mit Digitalkamerafunktion) auch das ganze aufgenommene Bild weitergeleitet und die Auslesesoftware entsprechend beim Empfänger vorhanden sein.

Die ausgelesene, im optisch auslesbaren Code enthaltene Information, beinhaltend den Identifikationscode 8 und gegebenenfalls die weiteren Informationen 9 werden der Benutzerverwaltungseinrichtung 31 weitergegeben. Diese registriert das Benutzermedium und gibt ihm die der Anwendung entsprechende Berechtigung.

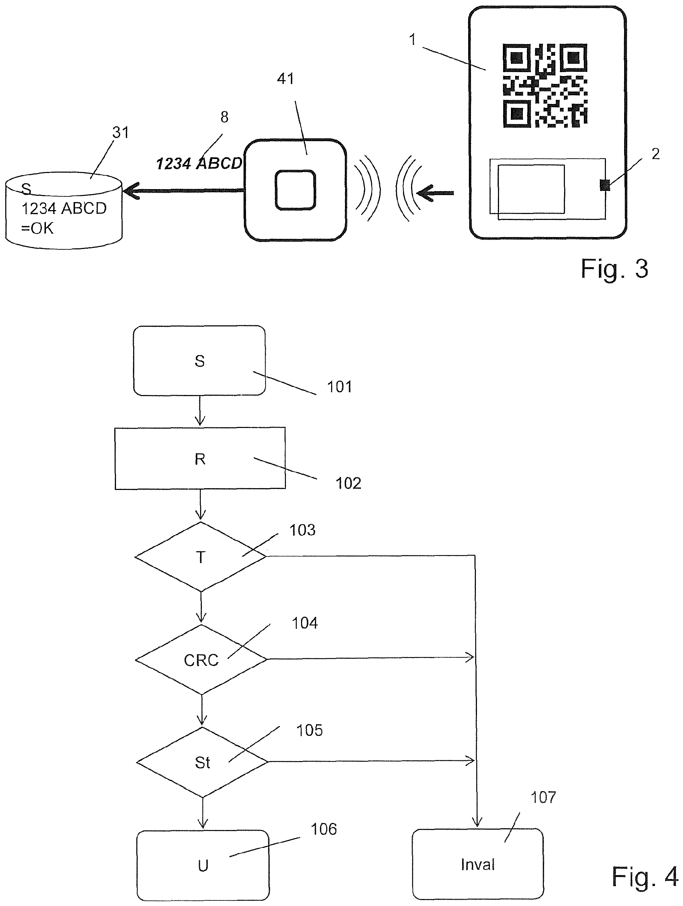

In einem Authentifizierungsprozess, wie in **Figur 3** dargestellt, wird eine Leseeinrichtung 41 den Identifkationscode 8 über RFID aus dem RFID-Chip 2 auslesen und an die Benutzerverwaltungseinrichtung 31 weitergeben, welche den Identifikationscode mit den registrierten Daten abgleicht und, sofern vorher der Initialisierungsprozess stattgefunden hat und das Benutzermedium als registriert erkannt wird, die entsprechende Freigabe erzeugt. Es kann auch vorgesehen sein, dass der Authentifizierungsprozess nicht ein Auslesen des ganzen Identifikationscode als solchen beinhaltet, sondern einen anders gearteten, die Authentifizierung des Benutzers durch die Leseeinrichtung und zugeordnete Benutzerverwaltungseinrichtung ermöglichenden Datenaustausch - insbesondere wenn die Benutzerverwaltungseinrichtung in der Leseeinrichtung integriert ist.

**Figur 4** zeigt schematisch einen möglichen während der Authentifizierung ablaufenden Prozess zur Plausibilitätsprüfung. Wenn beim Ausleseprozess in einem ersten Schritt 101 das Segment mit dem Identifikationscode gefunden wird, wird anschliessend dieses Segment ausgelesen 102. Dann werden in einem weiteren Schritt 103 gewisse Vorgaben für den Medientyp untersucht und anschliessend wird eine Redundanzprüfung 104 durchgeführt, um eventuelle Lesefehler auszuschliessen. Schliesslich wird ein Abgleich 105 eines dedizierten Teils des Identifikationscodes mit dem Herstellerschlüssel ('Stamp') durchgeführt. Nur wenn alle Tests 103-105 erfolgreich waren, wird der ausgelesene Identifkationscode für die Berechtigungsprüfung 106 verwendet. Ansonsten wird er als ungültig verworfen 107 und das Verfahren wird beendet.

Die optionale Identität eines Teils des Identifkationscodes mit dem sogenannten Stamp ist ein Sicherheitsmerkmal, welches beispielsweise durch das Legic-System ermöglicht wird. Der Stamp ist ein pro Hersteller individueller elektronischer Schlüssel. Indem dieser optional zum Teil des Identifikationscodes gemacht und obiger Abgleich 105 mit diesem durchgeführt wird, ergibt sich eine zusätzliche Sicherheit; bspw. kann so ausgeschlossen werden, dass jemand durch Manipulation systemfremden Benutzermedien funktionierende Berechtigungen verleiht.

Die Benutzerverwaltungseinrichtung 31 kann in die jeweilige Leseeinrichtung integriert oder von dieser separat, bspw. in einem Systemserver, eingerichtet sein.

Das Registrieren eines neuen Benutzermediums gemäss Figur 2 kann als Programmierung der Benutzerverwaltungseinrichtung 31 aufgefasst werden. Die Programmierung erfolgt durch eine Instanz, welche die entsprechende Berechtigung hat und vor welcher sich ein die für die Programmierung verantwortliche Person beispielweise auf geeignete Art identifizieren muss. Dafür gibt es beispielswese folgende Möglichkeiten:
- Die Programmierungseinheit wird durch eine Software gebildet, welche auf dem Smartphone (oder anderen Endgerät) läuft, mit welchem auch die Erfassung und Auswertung des optisch auslesbaren Codes erfolgt. Die Programmierung erfolgt dann einen geeigneten Kommunikationskanal, beispielsweise über Nahfeldkommunikation (NFC) oder Bluetooth oder einen anderen drahtlosen direkten Punkt-zu-Punkt Kommunikationskanal direkt an die in der Leseeinrichtung vorhandene Benutzerverwaltungseinrichtung.
- Die Programmierungseinheit wird durch eine Software gebildet, welche ebenfalls auf dem Smartphone (oder anderen Endgerät) läuft, die Übertragung an die Benutzerverwaltungseinrichtung erfolgt jedoch über das Internet (Cloud-Lösung), wodurch eine Mehrzahl von dezentralen Benutzerverwaltungseinrichtungen gleichzeitig erreicht werden kann, wobei dafür vorausgesetzt ist, dass diese über eine Datenverbindung ins Internet - bspw. über ein integriertes Mobilfunk-Endgerät oder ein integriertes Modem oder eine drahtbehaftete oder drahtlose Verbindung zu einem Computer - verfügen.
- Die Programmierungseinheit ist als Teil einer zentralen Einheit ausgebildet, welche mit den Leseeinrichtungen des Identifizierungssystems in Kommunikationsverbindung steht oder in Kommunikationsverbindung bringbar ist, beispielsweise ebenfalls drahtbehaftet oder über einen Mobilfunkstandard, oder über einen für Kurzstrecken konzipierten Standard wie ZigBee oder WLAN. Diese Möglichkeit lässt sich auch besonders gut mit der Option kombinieren, die Benutzerverwaltungseinrichtung ebenfalls zentral, bspw. in derselben zentralen Einheit und unter Umständen mit der Programmierungseinheit integriert vorzusehen. Beim Vorgehen gemäss dieser Option kann die Software zum Auslesen des optisch auslesbaren Codes dezentral im Smartphone (oder anderen Endgerät) oder alternativ in der zentralen Einheit vorgesehen sein, wobei im letzteren Fall das Smartphone (oder andere Endgerät) lediglich die unverarbeiteten Bilddaten oder interpretierte Bilddaten (jeweils verschlüsselt oder unverschlüsselt) an die zentrale Einheit übertragen muss.

## Patentansprüche

1. Identifizierungssystem, aufweisend
- Eine Mehrzahl von Benutzermedien (1), von denen jedes eine integrierte Schaltung (2) mit Speichermitteln und einen in den Speichermitteln abgespeicherten Identifikationscode (8) aufweist;
- wobei der Identifikationscode (8) zumindest einen Teil eines Identifikationsdatensatzes bildet, welcher alle für einen Authentifizierungsprozess notwendigen Daten aufweist;
- mindestens eine Leseeinrichtung (41);
- wobei die Leseeinrichtung (41) befähigt ist, für den Authentifizierungsprozess den Identifikationscode (8) über Radiowellen berührungslos aus der integrierten Schaltung (2) eines Benutzermediums (1) aus der Mehrzahl der Benutzermedien (1) auszulesen;
- wobei das Identifizierungssystem ferner eine Benutzerverwaltungseinrichtung (31) aufweist, die Benutzerverwaltungseinrichtung (31) mit der Leseeinrichtung (41) kommuniziert
- **dadurch gekennzeichnet,**
**dass** das Resultat des Authentifizierungsprozesses abhängig davon ist, ob das identifizierte Benutzermedium (1) in der Benutzerverwaltungseinrichtung (31) als berechtigt vermerkt ist oder nicht,
**dass** das Identifizierungssystem befähigt ist, einen Vorgang abhängig vom Resultat des Authentifizierungsprozesses auszulösen oder nicht auszulösen, bspw. das Aufschliessen einer Türe, das Abbuchen eines Geldbetrags oder den Zugang zu einem EDV-System, etc.,
**dass** jedes Benutzermedium (1) ferner einen optisch auslesbaren Code (7) aufweist, welcher eine das betreffende Benutzermedium (1) individuell identifizierende Identifikationsinformation beinhaltet, wobei das Identifizierungssystem befähigt ist, ein jeweils über den optisch auslesbaren Code (7) erkanntes Benutzermedium (1) in der Benutzerverwaltungseinrichtung (31) als berechtigt zu vermerken.

2. Identifizierungssystem gemäss Anspruch 1, wobei mindestens innerhalb einer Gruppe von Benutzermedien (1) aus der Mehrzahl von Benutzermedien (1) eine eindeutige Zuordnung zwischen dem jeweiligen Identifikationscode (8) und der jeweiligen Identifikationsinformation besteht.

3. Identifizierungssystem nach Anspruch 2, wobei die Identifikationsinformation den Identifikationscode (8) aufweist.

4. Identifizierungssystem nach einem der vorangehenden Ansprüche, ferner aufweisend ein Mittel zum Auswerten des durch eine Kamera erfassten optisch auslesbaren Codes und eine Programmierungseinheit zum Vermerken des erkannten Benutzermediums in der Benutzerverwaltungseinrichtung.

5. Identifizierungssystem nach Anspruch 4, wobei das Mittel zum Auswerten als auf einem Mobiltelefon (21) mit Digitalkamera ausführbares Programm oder Programmteil vorhanden ist.

6. Identifizierungssystem nach Anspruch 4 oder 5, wobei die Programmierungseinheit als auf einem Mobiltelefon (21) mit Digitalkamera ausführbares Programm oder Programmteil vorhanden ist.

7. Identifizierungssystem nach Anspruch 6, wobei die Benutzerverwaltungseinrichtung (31) in der Leseeinrichtung (41) integriert ist, und die Programmierungseinheit befähigt ist, über eine drahtlose Punkt-zu-Punkt-Verbindung mit der Leseeinrichtung Daten auszutauschen, wobei diese drahtlose Punkt-zu-Punkt-Verbindung über einen anderen Datenübertragungsstandard erfolgt als das Auslesen des Benutzermediums.

8. Identifizierungssystem nach Anspruch 7, wobei die drahtlose Punkt-zu-Punkt-Verbindung eine Verbindung über den Nahfeldkommunikationsstandard oder über den Bluetooth-Standard ist.

9. Identifizierungssystem nach einem der vorangehenden Ansprüche, wobei die Programmierungseinheit Teil einer zentralen Einheit ist, die mit mindestens einigen Leseeinrichtungen (41) des Identifizierungssystems in Kommunikationsverbindung steht oder in Kommunikationsverbindung bringbar ist.

10. Identifizierungssystem nach einem der vorangehenden Ansprüche, wobei die Benutzerverwaltungseinrichtung (31) Teil einer zentralen Einheit ist, die mit mindestens einigen Leseeinrichtungen (41) des Identifizierungssystems in Kommunikationsverbindung steht oder in Kommunikationsverbindung bringbar ist.

11. Identifizierungssystem nach einem der vorangehenden Ansprüche, wobei der optisch auslesbare Code (7) ein binärer zweidimensionaler Code ist.

12. Identifizierungssystem nach einem der vorangehenden Ansprüche, wobei der optisch auslesbare Code nebst der Identifikationsinformation weitere Informationen (9) beinhaltet, wobei diese weiteren Informationen mindestens eines der folgenden Dinge beinhalten:
- Informationen über die physische Ausgestaltung des Benutzermediums;
- Informationen über eine Version des Benutzermediums;
- Informationen über einen anzuwendenden Funktechnologie-Standard;
- Informationen über die Grösse eines für Anwendungen und/oder Anweisungen in den Speichermitteln zur Verfügung stehenden Datenspeichers.

13. Identifizierungssystem nach einem der vorangehenden Ansprüche, wobei der Identifikationscode einen einem Hersteller des Identifizierungssystems eindeutig zugeordneten Herstellerschlüssel aufweist, wobei in der Leseeinrichtung und/oder der Benutzerverwaltungseinrichtung der Herstellerschlüssel abgespeichert ist, und wobei während des Authentifizierungsprozesses oder vorgängig der betreffende Teil des Identifikationscodes mit dem Herstellerschlüssel abgeglichen wird.

14. Verfahren zum Hinzufügen eines Benutzermediums zu einem Identifizierungssystem gemäss einem der Ansprüche 1 bis 13, umfassend die Schritte:
- Zur Verfügung-Stellen des Benutzermediums mit dem in den Speichermitteln (2) abgespeicherten Identifikationscode (8) sowie mit dem optisch auslesbaren Code (7),
- Optisches Auslesen des optisch auslesbaren Codes,
- Auswerten des ausgelesenen optisch auslesbaren Codes mit Extraktion der Identifikationsinformation,
- als berechtigt Vermerken des Benutzermediums durch die Benutzerverwaltungseinrichtung.

15. Verfahren nach Anspruch 14, wobei das Auswerten des ausgelesenen optisch auslesbaren Codes auch eine Verifikation und/oder Plausibilitätsprüfung der Identifikationsinformation beinhaltet.

## Claims

1. An identification system, including
- a plurality of user media (1), each one of them having an integrated circuit (2) with storage means and an identification code (8) stored in the storage means;
- wherein the identification code (8) forms at least a portion of an identification data set, which includes all necessary data for an authentication process;
- at least one read device 41);
- wherein, for the authentication process, the read device (41) is enabled to read the identification code (8) contactless via radio waves from the integrated circuit (2) of a user medium (1) from among the plurality of user media (1);
- wherein the identification system further includes a user management device (31), the user management device (31) communicates with the read device (41),
**characterized in**
**that** the result of the authentication process depends on whether or not the identified user medium (1) is marked as authorized in the user management device (31),
**that** the identification system is enabled to trigger or not to trigger a procedure depending on the result of the authentication process, for example unlocking a door, debiting an amount of money or the acess to an EDP system, etc.,
**that** each user medium (1) further includes an optically readable code (7), which includes individually identifiable identification information relating to the user medium (1), wherein the identification system is enabled to mark down a respective user medium (1), which was recognized via the optically readable code (7), as authorized in the user management device (31).

2. The identification system according to claim 1, wherein, at least within a group of user media (1) from among the plurality of user media (1), a unique association is realized among the respective identification code (8) and the respective identification information.

3. The identification system according to claim 2, wherein the identification information includes the identification code (8).

4. The identification system according to any of the preceding claims, further including a means of evaluating the optically readable code the camera detected and a programming unit for marking down the recognized user medium in the user management device.

5. The identification system according to claim 4, wherein the means of evaluating is provided as a program or program part executable on a mobile phone (21) with digital camera.

6. The identification system according to claim 4 or 5, wherein the programming unit is provided as a program or program part executable on a mobile phone (21) with digital camera.

7. The identification system according to claim 6, wherein the user management device (31) is incorporated in the read device (41), and the programming unit is enabled to exchange data with the read device via a wireless point-to-point connection, wherein said wireless point-to-point connection is realized via a different data transmission standard than reading the user medium.

8. The identification system according to claim 7, wherein the wireless point-to-point connection is a connection via the near field communication standard or via a Bluetooth standard.

9. The identification system according to any of the preceding claims, wherein the programming unit is a part of a central unit, which is in communication connection or can be brought into communication connection with at least some read devices (41) of the identification system.

10. The identification system according to any of the preceding claims, wherein the user management device (31) is a part of a central unit, which is in communication connection or can be brought into communication connection with at least some read devices (41) of the identification system.

11. The identification system according to any of the preceding claims, wherein the optically readable code (7) is a two-dimensional binary code.

12. The identification system according to any of the preceding claims, wherein the optically readable code with the identification information includes further information (9), wherein said further information includes at least one of the following items:
- information on the physical configuration of the user medium;
- information on a version of the user medium;
- information on a radio technology standard to be applied;
- information on the size of data storage available for applications and/or instructions in the storage means.

13. The identification system according to any of the preceding claims, wherein the identification code includes a manufacturer key uniquely associated to a manufacturer of the identification system, wherein the manufacturer key is stored in the read device and/or in the user management device, and wherein during or prior to the authentication process the relevant part of the identification code is compared to the manufacturer key.

14. A method for adding a user medium to an identification system according to any of the claims 1 to 13, comprising the steps:
- providing the user medium with the identification code (8) stored in the storage means (2) as well as with the optically readable code (7),
- optically reading the optically readable code,
- evaluating the read optically readable code with extraction of the identification information,
- the user management device marking the user medium as authorized.

15. The method according to claim 14, wherein evaluating the read optically readable code also includes a verification and/or plausibility check of the identification information.

## Revendications

1. Système d'identification, comprenant
- une pluralité de média utilisateur (1), chacun d'eux ayant un circuit intégré (2) avec des moyens de mémoire et avec un code d'identification (8) mémorisé dans les moyens de mémoire ;
- le code d'identification (8) formant au moins une partie d'un jeu de données d'identification, lequel comprend toutes les données nécessaires pour un processus d'authentification ;
- au moins un dispositif lecteur (41) ;
- pour le processus d'authentification, le dispositif lecteur (41) étant capable de lire le code d'identification (8) par l'intermédiaire de d'ondes radio sans contact à partir du circuit intégré (2) d'un médium utilisateur (1) parmi la pluralité de média utilisateur (1) ;
- le système d'identification comprenant par ailleurs un dispositif de gestion d'utilisateurs (31), le dispositif de gestion d'utilisateurs (31) communiquant avec le dispositif lecteur (41), **caractérisé en ce**
**que** le résultat du processus d'authentification dépend du médium utilisateur (1) identifié étant indiqué dans le dispositif de gestion d'utilisateurs (31) comme autorisé ou non,
**que** le système d'identification est capable de déclencher ou ne pas déclencher une procédure en fonction du résultat du processus d'authentification, par exemple débarrer une porte, débiter un montant d'argent ou l'accès à un système de traitement informatique, etc.,
**que** par ailleurs chaque médium utilisateur (1) comprend un code (7) lisible optiquement, qui inclut des informations d'identification identifiant individuellement le médium utilisateur (1) concerné, le système d'identification étant capable de marquer comme autorisé un médium utilisateur (1) respectif reconnu dans le dispositif de gestion d'utilisateurs (31) via le code (7) lisible optiquement.

2. Système d'identification selon la revendication 1, au moins dans un groupe de média utilisateur (1) parmi la pluralité de média utilisateur (1) une association unique étant établie entre le code d'identification (8) respectif et les informations d'identification respectives.

3. Système d'identification selon la revendication 2, les informations d'identification comprenant le code d'identification (8).

4. Système d'identification selon l'une des revendications précédentes, comprenant par ailleurs un moyen d'évaluation du code lisible optiquement que la caméra a détecté et une unité de programmation pour noter le médium utilisateur (1) reconnu dans le dispositif de gestion d'utilisateurs.

5. Système d'identification selon la revendication 4, le moyen d'évaluation étant prévu comme programme ou partie de programme exécutable sur un téléphone mobile (21) avec caméra digitale.

6. Système d'identification selon la revendication 4 ou 5, l'unité de programmation étant prévue comme programme ou partie de programme exécutable sur un téléphone mobile (21) avec caméra digitale.

7. Système d'identification selon la revendication 6, le dispositif de gestion d'utilisateurs (31) étant intégré dans le dispositif lecteur (41), et l'unité de programmation étant capable d'échanger des données avec le dispositif lecteur par une connexion point-à-point sans fil, cette connexion point-à-point sans fil étant réalisée par un autre standard de transmission de données que la lecture du médium utilisateur.

8. Système d'identification selon la revendication 4, la connexion point-à-point sans fil étant une connexion du standard communication de champ proche ou du standard Bluetooth.

9. Système d'identification selon l'une des revendications précédentes, l'unité de programmation étant une partie d'une unité centrale, qui est en connexion de communication ou peut être mise en connexion de communication avec au moins quelques dispositifs lecteur (41) du système d'identification.

10. Système d'identification selon l'une des revendications précédentes, le dispositif de gestion d'utilisateurs (31) étant une partie d'une unité centrale, qui est en connexion de communication ou peut être mise en connexion de communication avec au moins quelques dispositifs lecteur (41) du système d'identification.

11. Système d'identification selon l'une des revendications précédentes, le code lisible optiquement (7) étant un code binaire bidimensionnel.

12. Système d'identification selon l'une des revendications précédentes, le code lisible optiquement en plus des informations d'identification inclut d'autres informations (9), ces autres informations incluant au moins un des objets suivants :
- des informations sur l'aménagement physique du médium utilisateur ;
- des informations sur une version du médium utilisateur ;
- des informations sur un standard de technologie radio à appliquer ;
- des informations sur la taille d'une mémoire de données disponibles dans les moyens de mémoire pour les applications et/ou les instructions.

13. Système d'identification selon l'une des revendications précédentes, le code d'identification comprenant une clé de producteur associée univoquement à un producteur du système d'identification, la clé de producteur étant mémorisée dans le dispositif lecteur et/ou le dispositif de gestion d'utilisateurs, et lors ou avant le procédé d'authentification la partie concernée du code d'identification est comparée à la clé de producteur.

14. Méthode pour ajouter un médium utilisateur à un système d'identification selon l'une des revendications 1 à 13, comportant les étapes :
- mettre à disposition le médium utilisateur avec le code d'identification (8) mémorisé dans les moyens de mémoire (2) de même qu'avec le code lisible optiquement (7),
- lecture optique du code lisible optiquement,
- évaluation du code lisible optiquement avec extraction des informations d'identification,
- le dispositif de gestion d'utilisateurs marquant le médium utilisateur comme autorisé.

15. Méthode selon la revendication 14, l'évaluation du code lisible optiquement lu comprenant aussi une vérification et/ou un contrôle de plausibilité.
